# EUROPEAN PATENT SPECIFICATION

(11) **EP 3 124 336 B1**
(45) Date of publication and mention of the grant of the patent: **12.09.2018**
(21) Application number: 15306230.2
(22) Date of filing: 28.07.2015
(51) Int. Cl.: B60S 1/38, B60S 1/40, B60S 1/52

(54) **CONNECTING ASSEMBLY FOR A WINDSCREEN WIPER BLADE**
VERBINDUNGSANORDNUNG FÜR EIN SCHEIBENWISCHERBLATT
ENSEMBLE DE CONNEXION DESTINÉ À UN BALAI D'ESSUIE-GLACE

(43) Date of publication of application: 01.02.2017
(73) Proprietor: Valeo Systèmes d'Essuyage, 78322 Le Mesnil Saint Denis (FR)
(72) Inventor: GRASSO, Giuseppe, 63340 Le Breuil sur Couze (FR); THEBAULT, Denis, 63000 Clermont Ferrand (FR); SCHAEUBLE, Michael, 71665 Vaihingen an der Enz (DE); SEVELLEC, Pierre, 63800 Cournon (FR)
(74) Representative: Vincent, Catherine Marie Marguerite

(56) References cited:
- EP-A1- 2 803 540
- EP-A2- 2 803 541
- DE-A1-102014 017 602

## Description

The present invention relates to equipment for vehicles, and more particularly equipment for wiping the windows of motor vehicles.

Motor vehicles are normally fitted with windscreen wiper systems in order to wash the windscreen and prevent the view that the driver has of his environment from being disrupted. These windscreen wipers are conventionally driven by a wiper arm making an angular back-and-forth movement and comprising elongated wiper blades, themselves supporting scraper blades made of an elastic material. These blades brush against the windscreen and clear away the water moving it outside the field of vision of the driver. The wiper blades are made in the form either, in a conventional version, of articulated arms which hold the scraper blade in several discrete positions, or, in a more recent version called "flat blade", of a semi-rigid assembly which holds the scraper blade over its whole length. The arm is also called bow or lever in the automotive area. In both solutions, the wiper blade is attached to the rotating wiper arm of the windscreen wiper by an assembly consisting of a mechanical connector and an adapter. The mechanical connector is a part that is locked on the articulated arm or directly onto the flat blade, while the adapter is an intermediate part which allows the connector to be fixed to the wiper arm of the windscreen wiper. These two parts are connected to one another via a transverse spindle which allows their relative rotation in a plane perpendicular to the windscreen passing through the wiper arm.

It is also known to provide windscreen wiper systems with devices for conveying a windscreen-washing liquid which is brought from a tank situated on the vehicle and which is sprayed towards the windscreen by nozzles situated either around the windscreen or on the windscreen wiper itself for a better distribution of the liquid. In the case of nozzles placed on the wiper blades, the windscreen-washing liquid is brought, before being distributed between them, by piping elements that are fixed to the wiper arm of the windscreen wiper and that are connected to the distribution system of the wiper blade at the mechanical connector by a rigid part, called a hydraulic connector. These piping elements, which are usually flexible and two in number in order to ensure cleaning in both the outward and the backward directions of the wiper blade, lead into the hydraulic connector which is fixed to the mechanical connector by appropriate fittings and which ensures the necessary seal with it. The mechanical connector thus comprises orifices capable of accommodating, by a sealed connection, the said fittings of the hydraulic connector.

On particular vehicle models, there are also devices for heating the windscreen wiper in order to defrost the wiper blade in the event of severe cold and prevent it from sticking to the windscreen under the action of the frost. The heating function is also used to defreeze the channels for washing liquid. These devices, which are more specially adapted to flat blades, usually comprise a heating device integrated into the assembly that supports the scraper blade and on which electrical resistors are placed. They also require an electrical connection device capable of interacting with the mechanical connector in order to transmit to the heating device the electric current that comes from the vehicle. The electric connector is usually attached to the hydraulic connector before the latter is installed on the mechanical connector in order to be affixed thereon at the same time. Quick-connection devices then ensure contact between the pins of the electric connector and those of the mechanical connector and finally contact with the heating resistors of the assembly supporting the scraper blade.

From EP 2803540 A1 an assembly for the production of a wiping system is known, comprising a terminal part of a wiper arm designed to move a wiper blade, and a connecting interface for conveying a liquid to the wiper blade, the assembly further comprising a sliding element having a first position in which it locks a connecting device of the wiper blade on the terminal part, and a second position enabling the terminal part and the connecting device to be separated. The sliding element is further provided for hanging the connecting interface either on the connecting device in the first position or on the terminal part in the second position.

It is desirable that the connecting interface is removed from the connecting device while unlocking the connecting device from the terminal part. The solution known from EP 2803540 A1 requires a large number of constructional parts to obtain this functionality.

It is an aim of the invention to provide a wiper blade assembly of simpler construction, which nonetheless provides the step of disconnecting the connecting interface from the wiper blade's connecting device as part of the step of unlocking the connecting device from the terminal part.

To this end, the present invention relates to an assembly for producing a wiping system, comprising: a terminal part of a wiper arm designed to move a wiper blade; a connecting device of the wiper blade which is releasably connectable to the terminal part; a sliding element movably mounted on the terminal part and movable between a first position for locking the connecting device of the wiper blade on said terminal part, and a second position enabling the terminal part and the connecting device to be separated; and a connecting interface which is releasably connectable to the connecting device of the wiper blade and provided for interfacing a liquid supply tube and/or an electrical cable with the connecting device. According to the invention, the connecting interface and the connecting device are together provided with interlocking parts for securing said releasable connection, at least one of said interlocking parts comprising a resilient member which is shaped for being pushed by a protrusion of the sliding element, in such a way that when the latter is moved from the first position to the second position, the protrusion pushes on the resilient member which thereby disengages the releasable connection between the connecting interface and the connecting device.

So according to the invention, the interlocking parts for securing the releasable connection between the connecting interface and the wiper blade's connecting device are provided as integral parts of the connecting interface and the connecting device themselves. Furthermore, the parts used for disengaging the releasable connection between the connecting interface and the wiper blade's connecting device, in particular the resilient member and the protrusion, are also integral parts of the parts of the assembly themselves. As a result, the desired functionality to disengage the connecting interface from the wiper blade's connecting device upon disconnecting the connecting device from the terminal part can be obtained without adding constructional parts to the assembly.

In a particular embodiment, the resilient member is provided on the connecting interface. It has been found that when the resilient member is provided on the connecting interface, this can lead to a reliable operation of the interlocking parts. In alternative embodiment, the resilient member could also be provided on the connecting device.

In a particular embodiment, the resilient member comprises a first sloped part for effecting the disengagement. This embodiment provides a simple construction to obtain the disengagement.

In the invention the resilient member is further shaped to remove the connecting interface from the connecting device. For example, the resilient member may comprise a second sloped part for effecting the removal of the connecting interface from the connecting device. Such embodiments can ensure the disconnection when one wants to remove the wiper blade assembly from the arm.

In a particular embodiment, the interlocking parts comprise a circular protrusion on the connecting device and a complementary groove on the connecting interface, the resilient member being provided on one side of the groove, such that the interlocking parts together form a snap connection means. The first and second sloped parts mentioned above can be provided on one or both sides of the groove. Such embodiments can provide a simple construction and a simple way to obtain a reliable connection and disconnection.

In a particular embodiment, the connecting interface and the connecting device are provided for being connected to and disconnected from each other in a direction substantially parallel to the direction of movement of the sliding element. This embodiment has the advantage that the direction of movement of the sliding element is parallel to the direction to disengage the interlocking parts, which can further simplify the construction.

In an alternative embodiment, the connecting interface and the connecting device are provided for being connected to and disconnected from each other in a direction under an angle with respect to the direction of movement of the sliding element, for example a direction substantially perpendicular to the direction of movement of the sliding element.

In a particular embodiment, the connecting interface, the connecting device and the sliding element are moulded parts in a plastic material.

The invention further provides a wiping system comprising a wiper arm and an assembly as described above.

It will be easier to understand the invention and other details, characteristics and advantages of the invention will become apparent by reading the following description which is given by way of example, is by no means restrictive, and refers to the accompanying drawings in which:
- Fig. 1 shows a perspective exploded view of an embodiment of wiper system according to the invention;
- Fig. 2 shows (a) a top view of the wiper system of Fig. 1; (b) a cross section along line B-B of Fig. 2(a) with the wiper system in "service position"; and (c) a cross section along line B-B of Fig. 2(a) with the wiper system in "working position";
- Fig. 3 shows details of Fig. 2(b), showing what happens when the sliding element is moved from the first to the second position;
- Fig. 4 shows a perspective exploded view of another embodiment of wiper system according to the invention;
- Fig. 5 shows a frontal view of the embodiment of Fig. 4;
- Fig. 6 shows (a) a side view of the wiper system of Figs. 4 and 5; (b) a cross section along line F-F of Fig. 6(a) with the sliding element in the first position; and (c) a cross section along line F-F of Fig. 6(a) with the sliding element moved to the second position;
- Fig. 7 shows a cross-sectional view along line F-F of Fig. 6(a) with the connecting interface removed from the connecting device.

Note that the figures show the invention in a detailed manner for the purpose of implementing the invention, but the figures could of course be used to define the invention more accurately if necessary.

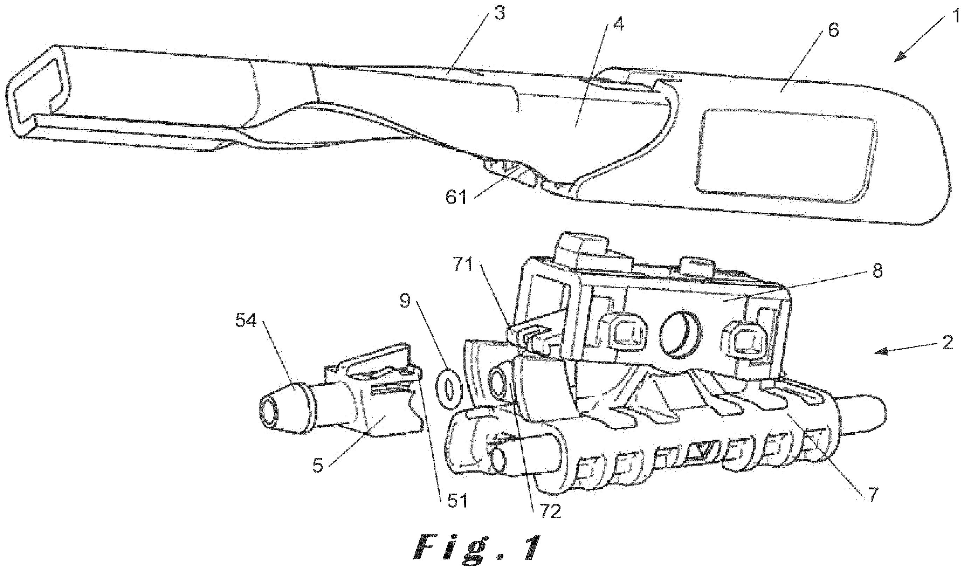

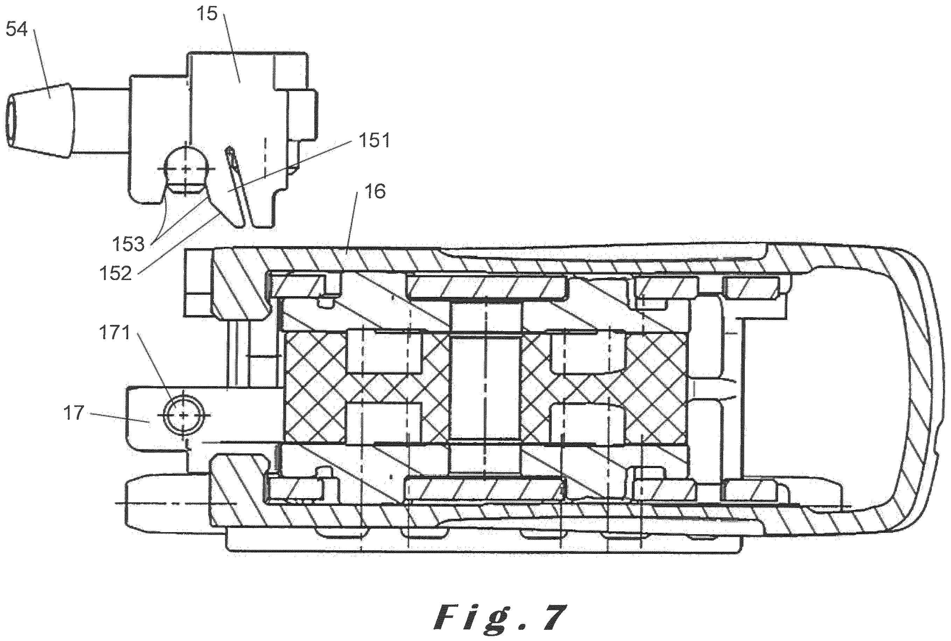

In the following, embodiments of the invention will be described with reference to Figs. 1 to 7. Same numerical references are used to designate same elements.

As used herein, the term "longitudinal" refers to the orientation of the wiper blade which is mounted on the wiper arm. The longitudinal direction corresponds to the main axis of the wiper blade in which it extends.

In the following, a first embodiment of the invention will be described with reference to Figs. 1 to 3.

Figures 1-3 show a wiping system 1 comprising a connecting device 2 of a wiper blade and a wiper arm 3 designed to move the wiper blade. An assembly is provided to connect the connecting device 2 on the wiper arm 3. This assembly comprises a terminal part 4 of the wiper arm 3, the connecting device 2, a sliding element 6 and a connecting interface 5. In use, the connecting interface 5 is connected onto the connecting device 2 and arranged inside the terminal part 4 of the wiper arm 3, and the terminal part 4 covers a part of the connecting device 2.

The connecting interface 5 may comprise a hydraulic connector for conveying a liquid to the connecting device 2 and the wiper blade as shown in the figures, and/or an electrical connector. In the following, for the sake of brevity, only embodiments with hydraulic connectors will be described. However, it is clear that the same principles may be applied on connecting interfaces having only an electrical connector, or both a hydraulic and an electric connector. The connecting interface 5 has a tubular element 54 for receiving an end of a supply tube (not shown), which is in hydraulic communication with a part of the connecting interface 5 that interfaces with a tubular part 72 of the connecting device 2. This tubular part 72 is in connected state held in a complementary cavity of the connecting interface 5 with a seal 9 in between. In embodiments with an electrical connector, the connecting interface has a cable receiving part and an electric part that interfaces with the connecting device, and the connecting interface is configured to conduct power and/or signals to electric components on the connecting device 2. An example of such electric components are heating elements in order to heat the fluid in case of freezing.

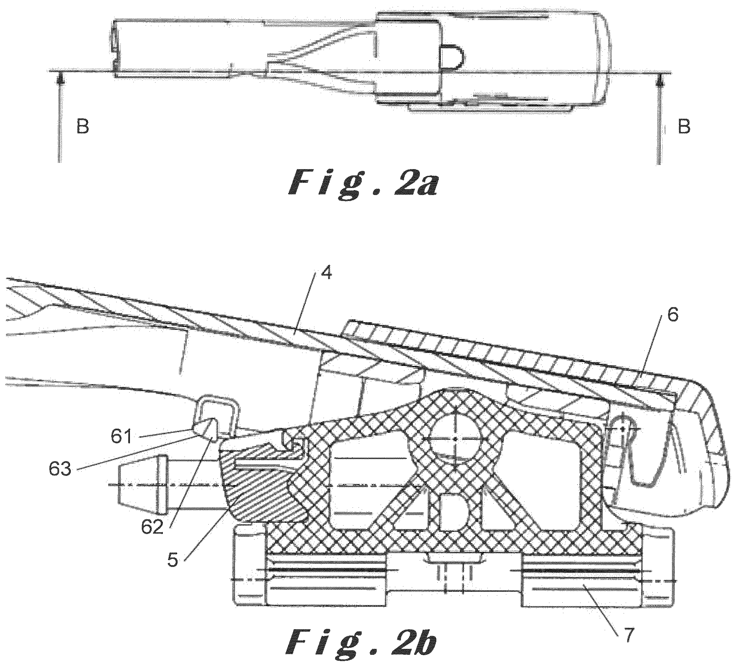

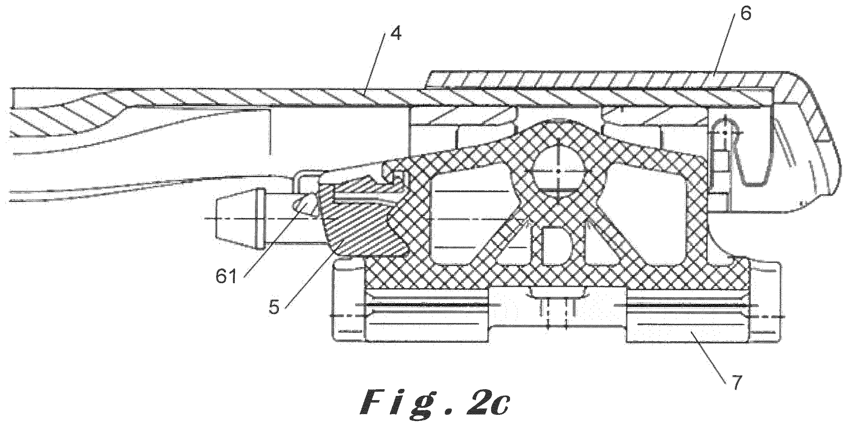

The connecting device 2 comprises a mechanical connector 7 that may be a part of the wiper blade or a part holding the wiper blade, and an adapter part 8 for linking the connecting device 2 to the terminal part 4 in a removable way. The adapter part 8 is pivotally connected to the mechanical connector 7, for example by means of a transverse spindle, so that in use the wiper blade can hinge with respect to the arm. The transverse spindle can be a separate part, or can be an integral part of the adapter or the mechanical connector. The spindle extends through the mechanical connector 7 and the adapter 8, transversally to the longitudinal orientation of the wiper blade 2, and forms the link between the two parts. The pivoting can be performed from a longitudinal position to an oblique position, illustrated on figure 2, compared to the arm 3.

Figure 1 shows the wiping system when the terminal part 4 and the adapter part 8 are separated, while the figure 2 shows the wiping system when the terminal part 4 and the adapter part 8 are linked together. The terminal part 4 and the adapter part 8 are linked or separated with an up and/or down movement action one part with respect to the other, the adapter part 8 being put into or out of the terminal part 4. This is known from the prior art and will therefore not be described further in detail.

As shown on figure 2, the sliding element 6 may be a cap covering the terminal part 4 in a manner allowing it to slide longitudinally on the terminal part 4. The sliding element 6 is able to move between two end positions, a first position or "working position" for locking the terminal part 4 on the adapter part 8, and a second position or "service position" enabling the terminal part 4 and the adapter part 8 of the connecting device 2 to be separated. As shown in figure 2b vs. 2c, the arm has to be brought to an angle of about 10° with respect to the wiper blade for being able to slide the cap from the first to the second position, otherwise the cap has a part, in particular a pair of protrusions 61, blocking the movement. These principles are known from the prior art and will therefore not be described further in detail.

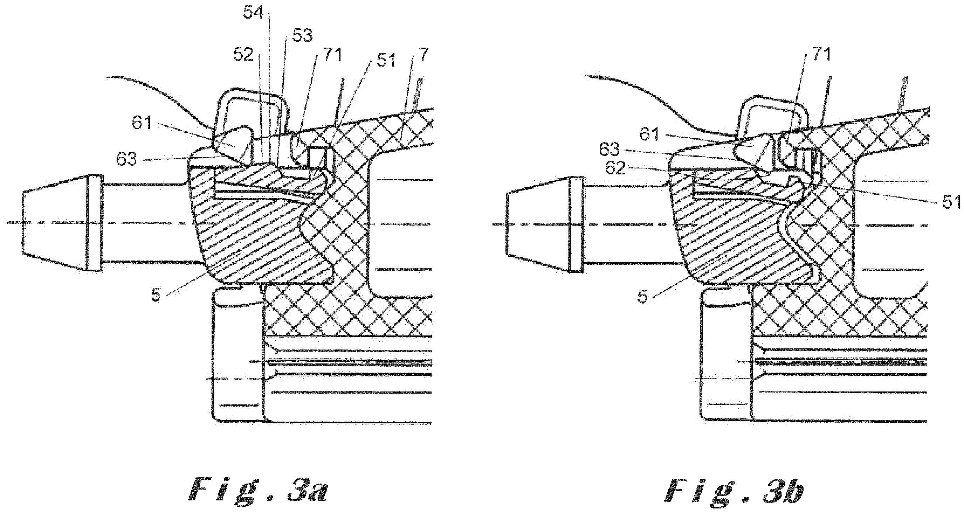

The connecting interface 5 and the mechanical connector 7 of the connecting device 2 are together provided with interlocking parts 51, 71 for securing the releasable connection of the two parts. One of these interlocking parts comprises a resilient member, in particular a pair of snap tongues 51 which are shaped for being pushed by the protrusions 61 of the sliding element or cap 6, when the latter is moved from the first position to the second position, and to thereby disengage said releasable connection between connecting interface 5 and mechanical connector 7. This is shown in steps in figures 3a-b. The protrusion 61 first passes along a first (upwards) sloped part 52, thereby pushing the snap tongue 51 down for effecting the disengagement from the interlocking part 71 on the mechanical connector 7. Then the protrusion 61 moves onto a second (downwards) sloped part 53 which due to the resiliency of the snap tongue 51 pushes against the protrusion 61, which likewise has a sloping shape, together leading to the effect that the connecting interface 5 is not only disengaged from the mechanical connector 7 but also removed from the mechanical connector 7.

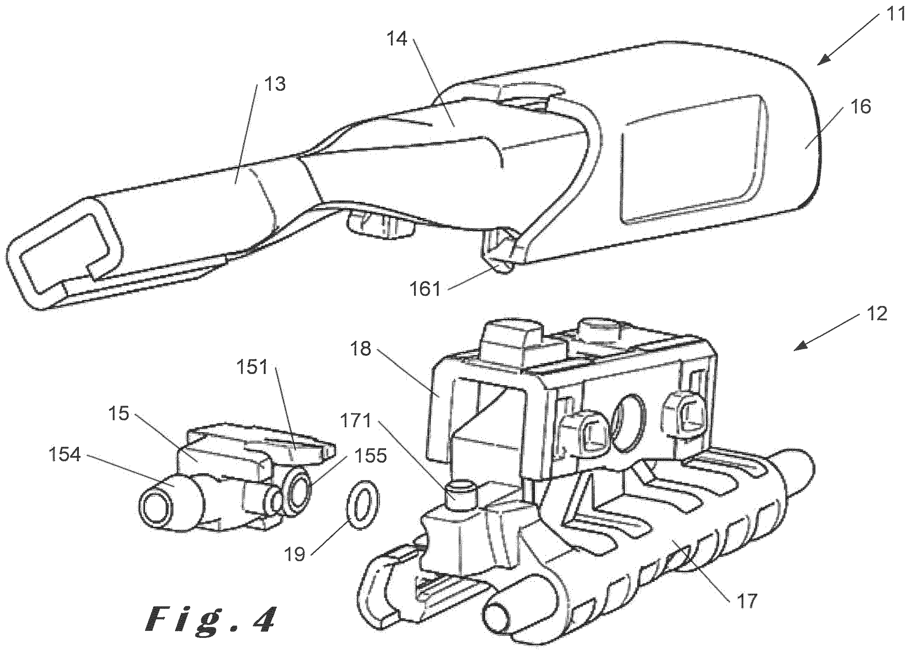

In the first embodiment according to figures 1-3, the connecting interface 5 and the connecting device 2 are provided for being connected to and disconnected from each other in a direction substantially parallel to the direction of movement of the sliding element or cap 6. In the following, with reference to figures 4-7, a second embodiment will be described in which the connecting interface 15 and the connecting device 12 are provided for being connected to and disconnected from each other in a direction substantially perpendicular to the direction of movement of the sliding element or cap 16.

Figures 4-7 show a wiping system 11 comprising a connecting device 12 of a wiper blade and a wiper arm 13 designed to move the wiper blade. An assembly is provided to connect the connecting device 12 on the wiper arm 13. This assembly comprises a terminal part 14 of the wiper arm 13, the connecting device 12, a sliding element 16 and a connecting interface 15. In use, the connecting interface 15 is connected onto the connecting device 12 and arranged inside the terminal part 14 of the wiper arm 13, and the terminal part 14 covers a part of the connecting device 12.

The connecting interface 15 may comprise a hydraulic connector for conveying a liquid to the connecting device 12 and the wiper blade as shown in the figures, and/or an electrical connector in the same way as mentioned above for the first embodiment. The hydraulic connector 15 has a tubular element 154 for receiving an end of a supply tube (not shown), which is in hydraulic communication with a part 155 of the hydraulic connector that interfaces with the connecting device 12. This part 155 is in connected state held in a complementary cavity of the connecting device 12 with a seal 19 in between.

The connecting device 12 comprises a mechanical connector 17 that may be a part of the wiper blade or a part holding the wiper blade, and an adapter part 18 for linking the connecting device 12 to the terminal part 14 in a removable way. The adapter part 18 is pivotally connected to the mechanical connector 17 in the same way as mentioned above for the first embodiment.

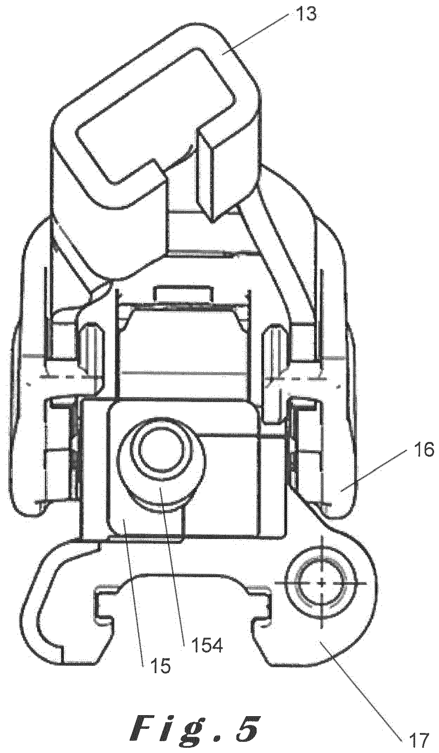

Figure 4 shows the wiping system when the terminal part 14 and the adapter part 18 are separated, while the figure 5 shows the wiping system when the terminal part 14 and the adapter part 18 are linked together. The terminal part 14 and the adapter part 18 are linked or separated with an up and/or down movement action one part with respect to the other, the adapter part 18 being put into or out of the terminal part 14. This is known from the prior art and will therefore not be described further in detail.

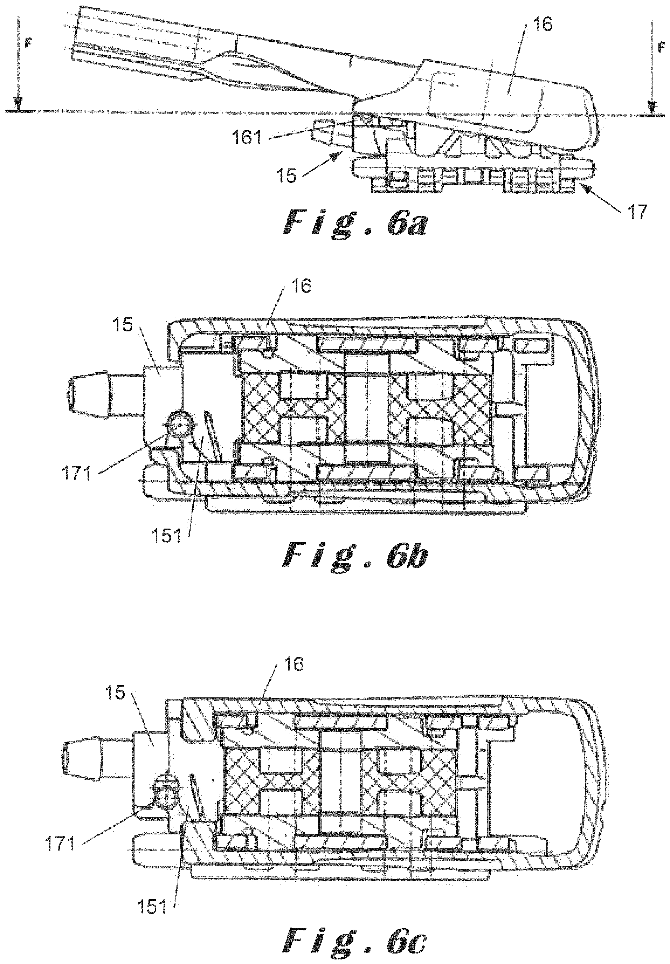

As shown on figure 6, the sliding element 16 may be a cap covering the terminal part 14 in a manner allowing it to slide longitudinally on the terminal part 14. The sliding element 16 is able to move between two end positions, a first position or "working position" for locking the terminal part 14 on the adapter part 18, shown in figure 6b, and a second position or "service position" enabling the terminal part 14 and the adapter part 18 of the connecting device 12 to be separated, as shown in figure 6c. As shown in figure 6a, the arm has to be brought to an angle of about 10° with respect to the wiper blade for being able to slide the cap from the first to the second position, otherwise the cap has a part, in particular a protrusion 161, blocking the movement. These principles are known from the prior art and will therefore not be described further in detail.

The connecting interface 15 and the mechanical connector 17 of the connecting device 12 are together provided with interlocking parts 151, 171, here a snap tongue 151 alongside a groove which receives a circular protrusion 171, for securing the releasable connection of the two parts. The snap tongue 151 is a resilient member which is shaped for being pushed by the protrusion 161 of the sliding element or cap 16, when the latter is moved from the first position to the second position, and to thereby disengage said releasable connection. This is shown in steps in figures 6b-c. The protrusion 161 first passes along a first sloped part 152, thereby pushing on the snap tongue 151. This opens the gap between the second sloped parts 153 of the connecting interface 15, so that the circular protrusion 171 on the mechanical connector 17 can pass through, which effects the disengagement of the interlocking parts 151, 171. Then, due to the orientation of the second sloped parts 153, in particular a "widening gap" and the resiliency of the snap tongue 151 which now pushes against the circular protrusion 171, the connecting interface 15 is not only disengaged from the mechanical connector 17 but also removed from the mechanical connector 17.

According to the above described embodiments of the invention, the interlocking parts 51, 71 and 151, 171 for securing the releasable connection between the connecting interface 5, 15 and the wiper blade's connecting device 2, 12 are provided as integral parts of the connecting interface and the connecting device themselves. Furthermore, the parts used for disengaging the releasable connection between the connecting interface and the wiper blade's connecting device, in particular the resilient member 51, 151 and the protrusion 61, 161, are also integral parts of the parts of the assembly themselves. As a result, the desired functionality to disengage the connecting interface from the wiper blade's connecting device upon disconnecting the connecting device from the terminal part is obtained without adding constructional parts to the assembly.

According to the above described embodiments of the invention, the resilient member 51, 151 is provided on the connecting interface 5, 15. In alternative embodiments, the resilient member could also be provided on the connecting device 2, 12.

According to the above described embodiments of the invention, there is each time provided a first sloped part for effecting the disengagement and a second sloped part for effecting the removal of the connecting interface 5, 15 from the connecting device 2, 12. These embodiments provide a simple construction to obtain the disengagement and ensure the disconnection when one wants to remove the wiper blade assembly from the arm.

According to the above described embodiments of the invention, the connecting interface 5, 15, the connecting device 2, 12 (in particular mechanical connector 7, 17 and adapter part 8, 18) and the sliding element 6, 16 can all be moulded parts in a plastic material. This can further reduce the cost of the assembly, on top of the avoidance of additional constructional parts for integrating the disengagement and removal functionalities.

## Claims

1. An assembly for the production of a wiping system, comprising:
a terminal part (4; 14) of a wiper arm (3; 13) designed to move a wiper blade;
a connecting device (2; 12) of the wiper blade which is releasably connectable to the terminal part;
a sliding element (6; 16) movably mounted on the terminal part and movable between a first position for locking the connecting device of the wiper blade on said terminal part, and a second position enabling the terminal part and the connecting device to be separated; and
a connecting interface (5; 15) which is releasably connectable to the connecting device of the wiper blade and provided for interfacing a liquid supply tube and/or an electrical cable with the connecting device;
the connecting interface (5; 15) and the connecting device (2; 12) are together provided with interlocking parts (51, 71; 151, 171) for securing said releasable connection,
the assembly being **characterised in that** at least one of said interlocking parts comprises a resilient member (51; 151) which is shaped for being pushed by a protrusion (61; 161) of the sliding element and to remove the connecting interface (5; 15) from the connecting device (2; 12), when moved from the first position to the second position, and to thereby disengage said releasable connection.

2. The assembly according to claim 1, wherein the resilient member (51; 151) is provided on the connecting interface (5; 15).

3. The assembly according to claim 1 or 2, wherein the resilient member comprises a first sloped part (52; 152) for effecting said disengagement.

4. The assembly according to any one of the preceding claims, wherein the resilient member comprises a second sloped part (53; 153) for effecting said removal.

5. The assembly according to any one of the preceding claims, wherein the interlocking parts comprise a circular protrusion (171) on the connecting device and a complementary groove on the connecting interface, the resilient member (151) being provided on one side of the groove, such that the interlocking parts together form a snap connection means.

6. The assembly according to any one of the preceding claims, wherein the connecting interface (5) and the connecting device (2) are provided for being connected to and disconnected from each other in a direction substantially parallel to the direction of movement of the sliding element.

7. The assembly according to any one of the preceding claims, wherein the connecting interface (15) and the connecting device (12) are provided for being connected to and disconnected from each other in a direction substantially perpendicular to the direction of movement of the sliding element.

8. The assembly according to any one of the preceding claims, wherein the connecting interface (5; 15) is for interfacing a liquid supply tube and wherein the connecting interface and the connecting device together comprise mating pipe parts, at least one of which is provided with a seal (9; 19) for sealing the connection between the mating pipe parts.

9. The assembly according to any one of the preceding claims, wherein the connecting interface (5; 15), the connecting device (2; 12) and the sliding element (6; 16) are moulded parts in a plastic material.

10. A wiper system comprising a wiper arm (3; 13) and the assembly according to any one of the preceding claims.

## Patentansprüche

1. Anordnung zur Erzeugung eines Wischsystems, aufweisend:
ein Endteil (4; 14) eines Wischerarms (3; 13), der zum Bewegen eines Wischerblatts gestaltet ist;
eine Verbindungsvorrichtung (2; 12) des Wischerblatts, die lösbar mit dem Endteil verbindbar ist;
ein Gleitelement (6; 16), das beweglich am Endteil angebracht ist und zwischen einer ersten Position zum Sperren der Verbindungsvorrichtung des Wischerblatts am Endteil und einer zweiten Position beweglich ist, die ermöglicht, dass das Endteil und die Verbindungsvorrichtung getrennt werden; und
eine Verbindungsschnittstelle (5; 15), die lösbar mit der Verbindungsvorrichtung des Wischerblatts verbindbar ist und zum Anschließen eines Flüssigkeitszufuhrschlauchs und/oder Stromkabels an die Verbindungsvorrichtung vorgesehen ist;
wobei die Verbindungsschnittstelle (5; 15) und die Verbindungsvorrichtung (2; 12) zusammen mit Verriegelungsteilen (51, 71; 151, 171) zum Sichern der lösbaren Verbindung versehen sind,
wobei die Anordnung **dadurch gekennzeichnet ist, dass** mindestens eines der Verriegelungsteile ein elastisches Glied (51; 151) aufweist, das zum Schieben durch einen Vorsprung (61; 161) des Gleitelements und zum Entfernen der Verbindungsschnittstelle (5; 15) aus der Verbindungsvorrichtung (2; 12), wenn es aus der ersten Position zur zweiten Position bewegt wird, und dadurch zum Freigeben der lösbaren Verbindung geformt ist.

2. Anordnung nach Anspruch 1, wobei das elastische Glied (51; 151) an der Verbindungsschnittstelle (5; 15) vorgesehen ist.

3. Anordnung nach einem der Ansprüche 1 oder 2, wobei das elastische Glied ein erstes geneigtes Teil (52; 152) zum Durchführen der Freigabe aufweist.

4. Anordnung nach einem der vorhergehenden Ansprüche, wobei das elastische Glied ein zweites geneigtes Teil (53; 153) zum Durchführen der Entfernung aufweist.

5. Anordnung nach einem der vorhergehenden Ansprüche, wobei die Verriegelungsteile einen kreisförmigen Vorsprung (171) an der Verbindungsvorrichtung und eine komplementäre Nut an der Verbindungsschnittstelle aufweisen, wobei das elastische Element (151) auf einer Seite der Nut vorgesehen ist, sodass die Verriegelungsteile zusammen ein Schnappverbindungsmittel ausbilden.

6. Anordnung nach einem der vorhergehenden Ansprüche, wobei die Verbindungsschnittstelle (5) und die Verbindungsvorrichtung (2) dazu vorgesehen sind, in einer Richtung im Wesentlichen parallel zur Bewegungsrichtung des Gleitelements miteinander verbunden und voneinander getrennt zu werden.

7. Anordnung nach einem der vorhergehenden Ansprüche, wobei die Verbindungsschnittstelle (15) und die Verbindungsvorrichtung (12) dazu vorgesehen sind, in einer Richtung im Wesentlichen senkrecht zur Bewegungsrichtung des Gleitelements miteinander verbunden und voneinander getrennt zu werden.

8. Anordnung nach einem der vorhergehenden Ansprüche, wobei die Verbindungsschnittstelle (5; 15) zum Anschließen eines Flüssigkeitszufuhrschlauchs dient, und wobei die Verbindungsschnittstelle und die Verbindungsvorrichtung zusammen zusammenpassende Röhrenteile aufweisen, von denen mindestens eines mit einer Dichtung (9; 19) zum Abdichten der Verbindung zwischen den zusammenpassenden Röhrenteilen versehen ist.

9. Anordnung nach einem der vorhergehenden Ansprüche, wobei die Verbindungsschnittstelle (5; 15), die Verbindungsvorrichtung (2; 12) und das Gleitelement (6; 16) Formteile aus einem Kunststoffmaterial sind.

10. Wischersystem, aufweisend einen Wischerarm (3; 13) und die Anordnung nach einem der vorhergehenden Ansprüche.

## Revendications

1. Ensemble pour la production d'un système d'essuyage, comprenant :
une partie terminale (4 ; 14) d'un bras d'essuie-glace (3 ; 13) conçu pour déplacer un balai d'essuie-glace ;
un dispositif de connexion (2 ; 12) du balai d'essuie-glace qui peut être connecté de manière libérable à la partie terminale ;
un élément coulissant (6 ; 16) monté mobile sur la partie terminale et mobile entre une première position pour verrouiller le dispositif de connexion du balai d'essuie-glace sur ladite partie terminale, et une seconde position permettant de séparer la partie terminale et le dispositif de connexion ; et
une interface de connexion (5 ; 15) qui peut être connectée de manière libérable au dispositif de connexion du balai d'essuie-glace et conçue pour assurer l'interface entre un tube d'alimentation en liquide et/ou un câble électrique et le dispositif de connexion ;
l'interface de connexion (5 ; 15) et le dispositif de connexion (2 ; 12) comprenant ensemble des pièces de verrouillage (51, 71 ; 151, 171) pour fixer ladite connexion libérable,
l'ensemble étant **caractérisé en ce qu'**au moins l'une desdites pièces de verrouillage comprend un élément élastique (51 ; 151) qui est formé pour être poussé par une saillie (61 ; 161) de l'élément coulissant et pour retirer l'interface de connexion (5 ; 15) du dispositif de connexion (2 ; 12), lorsqu'il est déplacé de la première position à la seconde position, et pour séparer ladite connexion libérable.

2. Ensemble selon la revendication 1, l'élément élastique (51 ; 151) étant disposé sur l'interface de connexion (5 ; 15).

3. Ensemble selon la revendication 1 ou 2, l'élément élastique comprenant une première partie inclinée (52 ; 152) pour effectuer ladite séparation.

4. Ensemble selon l'une quelconque des revendications précédentes, l'élément élastique comprenant une seconde partie inclinée (53 ; 153) pour effectuer ledit retrait.

5. Ensemble selon l'une quelconque des revendications précédentes, les parties de verrouillage comprenant une saillie circulaire (171) sur le dispositif de connexion et une rainure complémentaire sur l'interface de connexion, l'élément élastique (151) étant disposé sur un côté de la rainure, de sorte que les parties de verrouillage forment ensemble un moyen de connexion par encliquetage.

6. Ensemble selon l'une quelconque des revendications précédentes, l'interface de connexion (5) et le dispositif de connexion (2) étant conçus pour être connectés l'un à l'autre et déconnectés l'un de l'autre dans une direction sensiblement parallèle à la direction de déplacement de l'élément coulissant.

7. Ensemble selon l'une quelconque des revendications précédentes, l'interface de connexion (15) et le dispositif de connexion (12) étant conçus pour être connectés l'un à l'autre et déconnectés l'un de l'autre dans une direction sensiblement perpendiculaire à la direction de déplacement de l'élément coulissant.

8. Ensemble selon l'une quelconque des revendications précédentes, l'interface de connexion (5 ; 15) étant destinée à assurer l'interface avec un tube d'alimentation en liquide et l'interface de connexion et le dispositif de connexion comprenant ensemble des parties de tuyau d'accouplement, dont au moins une comprend un joint d'étanchéité (9 ; 19) pour sceller la connexion entre les parties de tuyau d'accouplement.

9. Ensemble selon l'une quelconque des revendications précédentes, l'interface de connexion (5 ; 15), le dispositif de connexion (2 ; 12) et l'élément coulissant (6 ; 16) étant des pièces moulées en matière plastique.

10. Système d'essuie-glace comprenant un bras d'essuie-glace (3 ; 13) et ensemble selon l'une quelconque des revendications précédentes.
